# EUROPÄISCHE PATENTSCHRIFT

(11) **EP 3 094 892 B1**
(45) Veröffentlichungstag und Bekanntmachung des Hinweises auf die Patenterteilung: **14.03.2018**
(21) Anmeldenummer: 15700415.1
(22) Anmeldetag: 09.01.2015
(51) Int. Cl.: F16H 61/30, F15B 9/12

(54) **PNEUMATISCHE SCHALTKRAFTUNTERSTÜTZUNGSEINRICHTUNG**
PNEUMATIC SHIFTING FORCE SUPPORT DEVICE
DISPOSITIF PNEUMATIQUE D'ASSISTANCE DE FORCE DE CHANGEMENT DE RAPPORT

(30) Priorität: 15.01.2014 DE 102014000282
(43) Veröffentlichungstag der Anmeldung: 23.11.2016
(73) Patentinhaber: Hoerbiger Automotive Komfortsysteme GmbH, 86956 Schongau (DE)
(72) Erfinder: WOLF, Jürgen, 86956 Schongau (DE); KACZMAREK, Krzysztof, PL-64-915 Jastrowie (PL); MACKE, Wlodzimierz, 82140 Olching (DE)
(74) Vertreter: Grättinger Möhring von Poschinger Patentanwälte Partnerschaft
(86) Internationale Anmeldenummer: PCT/EP2015/000023
(87) Internationale Veröffentlichungsnummer: WO 2015/106957

(56) Entgegenhaltungen:
- DE-A1-102007 048 400
- DE-A1-102011 015 713
- JP-A- 2001 065 687
- US-A- 5 857 400

## Beschreibung

Die vorliegende Erfindung betrifft eine pneumatische Schaltkraftunterstützungseinrichtung für ein Schaltgetriebe, umfassend eine einen Drucklufteinlass und eine Entlüftung aufweisende Gehäusestruktur, eine eingangsseitige, längs ihrer Achse verschiebbare Steuerstange und eine die Steuerstange umgebende, parallel zu dieser verschiebbare Ausgangseinheit, wobei
- die Ausgangseinheit einen in der Gehäusestruktur dichtend geführten, zwei pneumatische Arbeitsräume definierenden Arbeitskolben umfasst,
- funktional zwischen der Steuerstange und der Ausgangseinheit und strömungstechnisch zwischen dem Drucklufteinlass und den pneumatischen Arbeitsräumen eine Ventilanordnung vorgesehen ist, welche durch entsprechende Beaufschlagung der beiden pneumatischen Arbeitsräume eine pneumatische Folgeregelung der Ausgangseinheit zu der Steuerstange bewirkt, und
- die Ventilanordnung zwei mit der Steuerstange gekoppelte, an der Ausgangseinheit dichtend verschiebbar geführte Kolbenstrukturen und zwei relativ zur Steuerstange sowie zur Ausgangseinheit längsverschiebbar geführte Ventilschieber umfasst, wobei jeweils eine Kolbenstruktur längs einer Dichtkante mit einem zugeordneten Ventilschieber zusammenwirkt und jeder der beiden Ventilschieber seinerseits jeweils mit einem zugeordneten, ortsfest an der Ausgangseinheit angeordneten Ventilsitz zusammenwirkt.

Pneumatische Schaltkraftunterstützungseinrichtungen der vorstehend angegebenen Art werden insbesondere bei Lastkraftwagen eingesetzt. Sie entlasten den Fahrer des betreffenden Fahrzeugs, indem sie die von diesem beim Einlegen eines Ganges bzw. beim Gangwechsel an dem Schalthebel aufzubringende Kraft maßgeblich reduzieren. In der Praxis existieren verschiedene derartige Schaltkraftunterstützungseinrichtungen. Bekannt sind pneumatische Schaltkraftunterstützungseinrichtungen der eingangs genannten Art beispielsweise aus der DE 19539471 A1 und einer Reihe darauf aufbauender Schutzrechte wie beispielsweise DE 19839850 A1, EP 1108166 B1, EP 2068044 A2 und EP 2076695 B1, auf die im Hinblick auf konstruktive Details sowie die Funktion verwiesen wird.

Spezifische Aspekte und insbesondere eine spezifische Problematik, wie sie bei den pneumatischen Schaltkraftunterstützungseinrichtungen der hier in Rede stehenden Art existiert, sind in der gattungsbildenden DE 102011015713 A1, auf welche wiederum verwiesen und inhaltlich Bezug genommen wird, dargelegt und erörtert. Zur Verbesserung der Funktionalität der bis dahin bekannten Schaltkraftunterstützungseinrichtungen wird dabei vorgeschlagen, an den (an der Ausgangseinheit dichtend verschiebbar geführten) Kolbenstrukturen durchströmbare Drosselpassagen sowie - funktional und räumlich der betreffenden Kolbenstruktur zugeordnet - jeweils einen Drosselschieber vorzusehen, wobei der Drosselschieber jeweils relativ zu der betreffenden Kolbenstruktur verschiebbar und mittels einer Feder in eine die Drosselpassagen verschließende Stellung vorgespannt ist. Je nach der relativen Stellung des Drosselschiebers zu der zugeordneten Kolbenstruktur stellt sich eine bestimmte Querschnittsfläche der Drosselpassage ein. Die Stellung des Drosselschiebers relativ zu der Kolbenstruktur hängt dabei von der Position der (mit der Steuerstange gekoppelten) Kolbenstruktur relativ zur Ausgangseinheit ab. Dies wird erreicht, indem der Drosselschieber an dem zugeordneten, an der Ausgangseinheit angeordneten Ventilsitz anschlägt.

Im Hinblick auf den vorstehend dargelegten Stand der Technik liegt der vorliegenden Erfindung die Aufgabe zugrunde, eine Schaltkraftunterstützungseinrichtung der eingangs angegebenen Art bereitzustellen, welche die mit der Schaltkraftunterstützungseinrichtung nach der DE 102011015713 A1 verbundenen Vorteile aufweist, sich dabei allerdings durch einen einfacheren Aufbau auszeichnet.

Gelöst wird diese Aufgabenstellung gemäß der vorliegenden Erfindung, indem bei einer Schaltkraftunterstützungseinrichtung der eingangs angegebenen Art zumindest einem Kolbenstruktur/Ventilschieber-Paar eine Drosseleinrichtung dergestalt zugeordnet ist, dass eine ortsfest an der Ausgangseinheit angeordnete Drosseldichtung mit mindestens einer an dem betreffenden Ventilschieber oder der betreffenden Kolbenstruktur angeordneten Drosselpassage zusammenwirkt, deren wirksame Querschnittsfläche von der relativen Position des die Drosselpassage aufweisenden Bauteils relativ zu der zugeordneten Drosseldichtung abhängt. Eines der im synergistisch-funktionalen Zusammenwirken mit den übrigen konstruktiven Merkmalen der erfindungsgemäßen Schaltkraftunterstützungseinrichtung besonders wesentlichen Merkmale besteht demgemäß darin, dass - zur Einstellung des wirksamen Strömungsquerschnitts der Drosselpassage in Abhängigkeit von der relativen Position der Steuerstange bezogen auf die Ausgangseinheit - eine ortsfest an der Ausgangseinheit angeordnete, mit der mindestens einen Drosselpassage zusammenwirkende Drosseldichtung vorgesehen ist. Einer Vorspannfeder, wie sie bei der Schaltkraftunterstützungseinrichtung nach der DE 102011015713 A1 zur Rückstellung des Drosselschiebers vorgesehen ist, bedarf es demnach in Umsetzung der vorliegenden Erfindung nicht. Dies ist nicht nur ein Kostenaspekt. Auch ergeben sich vorteilhafte Auswirkungen auf den erforderlichen Bauraum in dem Sinne, dass die erfindungsgemäße Schaltkraftunterstützungseinrichtung noch kompakter ausgeführt sein kann als die nach der DE 102011015713 A1. Auch die Betriebseigenschaften werden durch die Erfindung positiv beeinflusst. Denn weder kann, da eine solche nicht vorhanden ist, eine Drosselschieberfeder klemmen oder gar Schaden nehmen bzw. brechen; noch kann ein (auf der Kolbenstruktur verschiebbar geführter) Drosselschieber verklemmen oder in sonstiger Weise blockiert werden, da auch ein Drosselschieber, anders als nach der DE 102011015713 A1, nach der vorliegenden Erfindung nicht vorgesehen ist. Schließlich ergibt sich in Umsetzung der vorliegenden Erfindung zusätzlich ein erweiterter Spielraum für die konstruktive Gestaltung der Schaltkraftunterstützungseinrichtung; denn die Drosselpassage kann wahlweise an der Kolbenstruktur oder aber an dem Ventilschieber angeordnet sein. So kann die Schaltkraftunterstützungseinrichtung optimal an die jeweiligen Anforderungen angepasst werden.

In bevorzugter Weiterbildung der vorliegenden Erfindung ist die mindestens eine Drosselpassage - bevorzugt sind jeweils mehrere gleichmäßig über den Umfang verteilte Drosselpassagen vorgesehen - außen auf einem Mantelabschnitt der betreffenden Kolbenstruktur oder aber des betreffenden Ventilschiebers angeordnet.

Ist die mindestens eine Drosselpassage an der Kolbenstruktur angeordnet, so ist die Drosseldichtung besonders bevorzugt die Kolbenstruktur umgebend an einem Vorsprung eines Strukturelements angeordnet, an welchem auch der mit dem zugeordneten Ventilschieber zusammenwirkende Ventilsitz angeordnet ist. Der Vorsprung des besagten Strukturelements ist dabei bevorzugt hülsenförmig ausgeführt, wobei eine ringförmige Drosseldichtung in einer umlaufenden Ringnut des hülsenförmigen Vorsprungs des Strukturelements aufgenommen ist.

Zur Bereitstellung einer Entlüftung des jeweiligen pneumatischen Arbeitsraumes in der "Nullstellung" der Steuerstange relativ zur Ausgangseinheit existiert vorteilhafterweise eine von der Drosselpassage unabhängige, in der Nullstellung geöffnete Entlüftungspassage zwischen dem jeweiligen pneumatischen Arbeitsraum und der Entlüftung. Für eine solche Entlüftungspassage ist gemäß einer konstruktiv besonders einfachen bevorzugten Ausführungsform der vorliegenden Erfindung vorgesehen, dass in der Nullstellung die Drosseldichtung von der Kolbenstruktur abhebt, um eine Entlüftungspassage freizugeben. Hebt demgegenüber, was seinerseits mit gewissen Vorteilen verbunden ist, die Drosseldichtung in der besagten Nullstellung (des Steuerschiebers und der Ausgangseinheit relativ zueinander) nicht von der Kolbenstruktur ab, so ist gemäß einer anderen bevorzugten Weiterbildung der vorliegenden Erfindung der Vorsprung des weiter oben erläuterten Strukturelements, an welchem die Drosseldichtung angeordnet ist, von einer Entlüftungsbohrung durchsetzt; an der Kolbenstruktur ist dabei ein gesondertes Dichtelement (z.B. ein innen an dem Vorsprung des Strukturelements gleitend anliegender Dichtring) angeordnet, welches die Entlüftungsbohrung verschließt, wenn - durch entsprechende Verschiebung der Kolbenstruktur relativ zum Strukturelement - die Drosselpassage freigegeben wird bzw. die Kolbenstruktur über eine Dichtkante gegenüber dem Ventilschieber abdichtet.

Ist die mindestens eine Drosselpassage nicht an der Kolbenstruktur sondern vielmehr an dem Ventilschieber vorgesehen, insbesondere außen auf einem Mantelabschnitt desselben, was namentlich im Hinblick auf die Bereitstellung einer technisch einfachem Entlüftung des jeweiligen Arbeitsraumes in der Nullstellung vorteilhaft ist, so kann gemäß einer bevorzugten, konstruktiv besonders einfachen sowie besonders kompakte Baumaße ermöglichenden Weiterbildung der Erfindung der (mit dem Ventilschieber zusammenwirkende) Ventilsitz durch die Drosseldichtung gebildet sein. Dies ist indessen keineswegs zwingend. Vielmehr kann der besagte Ventilsitz auch räumlich und funktional unabhängig von der Drosseldichtung ausgeführt sein, was sich für eine Optimierung der Gesamtfunktion als günstig erweisen kann.

Die vorliegende Erfindung erweist sich als außerordentlich vorteilhaft auch hinsichtlich der Möglichkeiten, die Drosseleinrichtung der Schaltkraftunterstützungseinrichtung (mit geringen Aufwand) an die jeweiligen Anforderungen, wie sie insbesondere durch die übrigen Komponenten des Antriebsstranges des betreffenden Fahrzeugs (Motor, Kupplung, Getriebe) vorgegeben sind, anzupassen. So können insbesondere Schaltkraftunterstützungseinrichtungen bei im Übrigen identischer Ausführung allein durch Auslegung des die mindestens eine Drosselpassage aufweisenden Bauteils, d.h. namentlich die individuelle Gestaltung und/oder Anordnung der mindestens einen Drosselpassage an die jeweiligen Anforderungen hinsichtlich des Drosselverhaltens adaptiert werden.

Je nach dem geforderten Drosselverhalten kann die mindestens eine Drosselpassage über ihre axiale Erstreckung tiefer oder aber flacher, breiter oder aber schmaler werden, je nachdem, ob eine abnehmende oder aber eine zunehmende Drosselwirkung bereitzustellen ist. Auch ist denkbar, dass die mindestens eine Drosselpassage sich zunächst erweitert (bzw. tiefer wird) und sodann wieder schmaler (bzw. flacher) wird, oder umgekehrt; auf diese Weise erfährt das Drosselverhalten im Verlauf des Verschiebewegs des die mindestens eine Drosselpassage aufweisenden Bauteils relativ zur Drosseldichtung einen Extremwert. Mehrere auf demselben Bauteil vorgesehene Drosselpassagen können unterschiedliche Geometrien aufweisen. Sie können weiterhin axial zueinander versetzt sein, so dass - bei einer fortgesetzten Verschiebung des die Drosselpassagen aufweisenden Bauteils relativ zur Drosseldichtung - ihre Wirkung gestaffelt einsetzt und/oder gestaffelt endet. Es sind ersichtlich diverse Varianten und Kombinationen möglich, um eine individuell optimale Betriebscharakteristik zu erzielen.

Diverse technische, konstruktive und/oder funktionale Aspekte, wie sie in der DE 102011015713 A1 eingehend dargelegt, beschrieben und erläutert sind, erweisen sich auch in Umsetzung der vorliegenden Erfindung als vorteilhaft. Um unnötige Wiederholungen zu vermeiden, wird im Hinblick auf diese Aspekte auf die DE 102011015713 A1 verwiesen, deren gesamter Inhalt durch Bezugnahme zum Inhalt der vorliegenden Patentanmeldung gemacht wird.

Im Folgenden wird die vorliegende Erfindung anhand mehrerer in der Zeichnung veranschaulichter bevorzugter Ausführungsbeispiele näher erläutert. Dabei zeigt
- Fig. 1: einen Längsschnitt durch den für die vorliegende Erfindung relevanten Bereich eines ersten Ausführungsbeispiels einer erfindungsgemäß ausgeführten pneumatischen Schaltkraftunterstützungseinrichtung,
- Fig. 2: einen (zu Fig. 1 im vergrößerten Maßstab dargestellten) Längsschnitt durch den für die vorliegende Erfindung relevanten Bereich eines zweiten Ausführungsbeispiels einer erfindungsgemäß ausgeführten pneumatischen Schaltkraftunterstützungseinrichtung,
- Fig. 3: einen (zu Fig. 2 im nochmals vergrößerten Maßstab dargestellten) Längsschnitt durch den für die vorliegende Erfindung relevanten Bereich eines dritten Ausführungsbeispiels einer erfindungsgemäß ausgeführten pneumatischen Schaltkraftunterstützungseinrichtung,
- Fig. 4: in einem Längsschnitt einen Detailaspekt des in Fig. 3 veranschaulichten Ausführungsbeispiels,
- Fig. 5: eine Abwandlung der Konstruktion nach den Figuren 3 und 4,
- Fig. 6: eine nochmals andere konstruktive Umsetzung der vorliegenden Erfindung und
- Fig. 7: einen Längsschnitt durch einen größeren als den in Fig. 1 wiedergegebenen Ausschnitt einer erfindungsgemäß ausgeführten pneumatischen Schaltkraftunterstützungseinrichtung, welche technisch-funktional weitgehend der in Fig. 1 gezeigten entspricht.
Hinsichtlich grundsätzlicher Gestaltungsmerkmale entsprechen die Schaltkraftunterstützungseinrichtungen gemäß den in der Zeichnung veranschaulichten Ausführungsbeispielen dem Stand der Technik nach der DE 102011015713 A1. Insbesondere weisen auch die vorliegend veranschaulichten Ausführungsbeispiele der Schaltkraftunterstützungseinrichtung, ohne dass dies in der Zeichnung dargestellt wäre, jeweils drei primäre Funktionseinheiten auf, nämlich eine Gehäusestruktur, eine Eingangseinheit E und eine diese umgebende Ausgangseinheit A, wobei die Eingangseinheit E und die Ausgangseinheit A längs der Achse 1 relativ zueinander und relativ zu der Gehäusestruktur verschiebbar sind. Die Gehäusestruktur und die Ausgangseinheit A (mit dem Arbeitskolben K) sind im Wesentlichen so gestaltet, wie dies der DE 102011015713 A1, auf die insoweit verwiesen wird, entnehmbar ist.

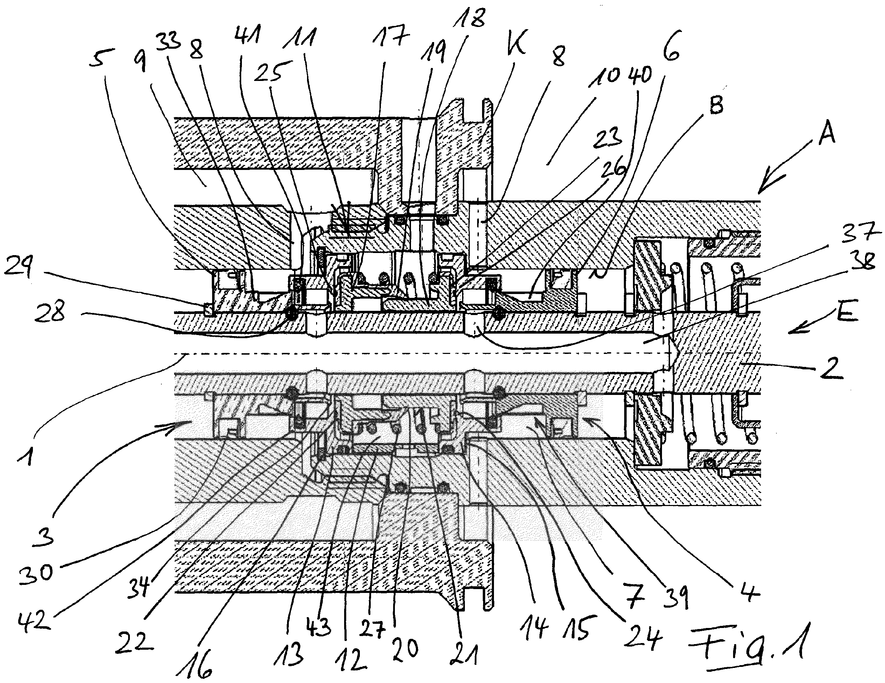

Mit der Steuerstange 2 der Eingangseinheit sind - bei jedem der gezeigten Ausführungsbeispiele - zwei Kolbenstrukturen 3, 4 lagefest gekoppelt. Jede der beiden Kolbenstrukturen 3, 4 umfasst dabei einen eigentlichen Ventilkolben 5 bzw. 6, der zur Abgrenzung eines zugeordneten Vorraumes 7 in einer zylindrischen Bohrung B der Ausgangseinheit A dichtend verschiebbar geführt ist. Jeder der beiden Vorräume 7 ist über einen Kanal 8 mit einem zugeordneten pneumatischen Arbeitsraum 9, 10 verbunden. Die beiden Kolbenstrukturen 3, 4 bilden einen funktionalen Bestandteil einer Ventilanordnung 11, die funktional zwischen der Steuerstange 2 und der Ausgangseinheit A und strömungstechnisch zwischen einem an der Gehäusestruktur angeordneten Drucklufteinlass und den beiden pneumatischen Arbeitsräumen 9, 10 vorgesehen ist und durch entsprechende Beaufschlagung der beiden pneumatischen Arbeitsräume 9, 10 mit Druckluft eine pneumatische Folgeregelung der Ausgangseinheit A zu der Eingangseinheit, d.h. der Steuerstange 2 bewirkt. Die Ventilanordnung 11 ist dabei im Einzelnen wie nachstehend dargelegt aufgebaut:
Wie dies in Fig. 1 dargestellt ist, sind in der Ausgangseinheit A in einem vorgegebenen, durch eine Distanzhülse 12 definierten und eingehaltenen Abstand zueinander zwei Strukturelemente 13, 14 lagefest aufgenommen. Die Lagesicherung erfolgt dabei einerseits mittels eines Absatzes 15 und andererseits mittels eines Sicherungsringes 16. In dem Raum zwischen den beiden Strukturelementen 13, 14 sind zwei Ventilschieber 17, 18 aufgenommen, die beide auf der Steuerstange 2 verschiebbar geführt und gegeneinander abgedichtet sind. Zum Zwecke der Abdichtung ist mit dem einen Ventilschieber 17 ein elastomeres Dichtelement 19 verbunden, welches eine radiale ringförmige Dichtkante 20 aufweist, die auf einer zylindrischen Dichtfläche 21 des anderen Ventilschiebers 18 dichtend gleitet. Beide Ventilschieber 17, 18 weisen weiterhin jeweils stirnseitig eine ebenfalls elastomere Dichtfläche 22 bzw. 23 auf, die mit einer Dichtkante 24 eines an dem jeweils zugeordneten Strukturelement 13 bzw. 14 ausgeführten Ventilsitzes 25 bzw. 26 zusammenwirkt. Mittels einer zwischen den beiden Ventilschiebern 17, 18 angeordneten Druckfederanordnung 27 werden die beiden Ventilschieber 17, 18 gegen den jeweils zugeordneten Ventilsitz 25 bzw. 26 vorgespannt.

Jede der beiden jeweils zwischen einem Dichtring 28 und einem Sicherungsring 29 auf der Steuerstange 2 festgelegten Kolbenstrukturen 3 bzw. 4 umfasst neben dem eigentlichen, einen an der Ausgangseinheit A dichtend gleitenden Dichtring 30 aufweisenden Ventilkolben 5 bzw. 6 einen zylindrischen Ansatz 33. An diesem ist jeweils stirnseitig (an einem Vorsprung) eine ringförmige Dichtkante 34 ausgeführt, welche jeweils mit dem zugeordneten Ventilschieber 17 bzw. 18 zusammenwirken kann, um diesen von dem betreffenden Ventilsitz 25 bzw. 26 abzuheben und dabei Kolbenstruktur und Ventilschieber gegeneinander abzudichten. Hierzu steht die ringförmige Dichtkante 34 jeweils radial innerhalb des zugeordneten Ventilsitzes 25 bzw. 26 der elastomeren Dichtfläche 22 bzw. 23 des betreffenden Ventilschiebers 17 bzw. 18 gegenüber. In der in der Zeichnung abgebildeten neutralen Stellung ("Nullstellung") halten die beiden ringförmigen Dichtkanten 34 allerdings zu den Ventilschiebern 17 bzw. 18 jeweils einen vorgegebenen Abstand ein, so dass jeweils zwischen der betreffenden Dichtkante 34 und dem zugeordneten Ventilschieber 17 bzw. 18 ein Ringspalt besteht, der über eine Abluftpassage, welche eine individuelle radiale Bohrung 37 und eine gemeinsame axiale Bohrung 38 in der Steuerstange 2 umfasst, mit einer endseitig an der Gehäusestruktur angeordneten Entlüftung kommuniziert.

An den beiden Kolbenstrukturen 3 bzw. 4, nämlich an den zylindrischen Ansätzen 33 derselben sind weiterhin jeweils zwei gleichmäßig um die Achse herum verteilt angeordnete Drosselpassagen 39 ausgeführt. Die Drosselpassagen 39 sind dabei jeweils durch eine im jeweiligen Ansatz 33 der Kolbenstruktur 3 bzw. 4 ausgeführt Nut 40 gebildet, deren radiale Tiefe sich in axialer Richtung der Steuerstange 2 verändert, nämlich in Richtung auf den jeweiligen Ventilkolben 5 bzw. 6 hin zunimmt.

Die Drosselpassagen 39 wirken jeweils mit einer ringförmigen Drosseldichtung 41 zusammen, welche ortsfest an der Ausgangseinheit A angeordnet ist, nämlich in einer Ringnut eines an dem jeweils zugeordneten Strukturelement 13, 14 angeformten ringförmigen Vorsprungs 42. In der in Fig. 1 veranschaulichten Nullstellung besteht ein ringförmiger Spalt zwischen der Drosseldichtung 41 und dem zugeordneten Ansatz 33 der betreffenden Kolbenstruktur 3 bzw. 4; der ringförmige Spalt ist Bestandteil der jeweiligen Entlüftungspassage von dem betreffenden pneumatischen Arbeitsraum 9 bzw. 10 über den zugeordneten Kanal 8, den Vorraum 7, den Ringspalt zwischen der Dichtkante 34 der Kolbenstruktur 3 bzw. 4 und dem Ventilschieber 17 bzw. 18, die jeweilige individuelle Bohrung 37 und die gemeinsame Bohrung 38. Wird indessen die Steuerstange aus der Nullstellung verschoben, so gelangt - je nach der Bewegungsrichtung der Steuerstange 2 - eine der Kolbenstruktur-Dichtkanten 34 zur dichtenden Anlage an dem zugeordneten Ventilschieber 17 bzw. 18, und gleichzeitig tritt der zugeordnete Kolbenstruktur-Ansatz 33 in die Drosseldichtung 41 ein bzw. kommt an dieser zur Anlage. Bei einer weiter fortgesetzten Verschiebung der Steuerstange 2 hebt die Kolbenstruktur 3 bzw. 4 den zugeordneten Ventilschieber 17 bzw. 18 vom jeweiligen Ventilsitz 25 bzw. 26 ab, und zugleich wird die Drosselpassage 39 geöffnet, wobei die Größe des wirksamen Strömungsquerschnitts der Drosselpassage 39 sich danach richtet, wie weit die Steuerstange 2 relativ zu der Ausgangseinheit verschoben wird. Der betreffende pneumatische Arbeitsraum 9 bzw. 10 wird aus dem Druckluftraum 43 heraus beaufschlagt, und zwar - je nach der Stellung der Steuerstange 2 relativ zur Ausgangseinheit A - mehr oder weniger stark gedrosselt. Auf der gegenüberliegenden Seite der Ventileinheit 11 bleibt demgegenüber die weiter oben beschriebene Entlüftungspassage geöffnet und der betreffende pneumatische Arbeitsraum 9 bzw. 10 drucklos.

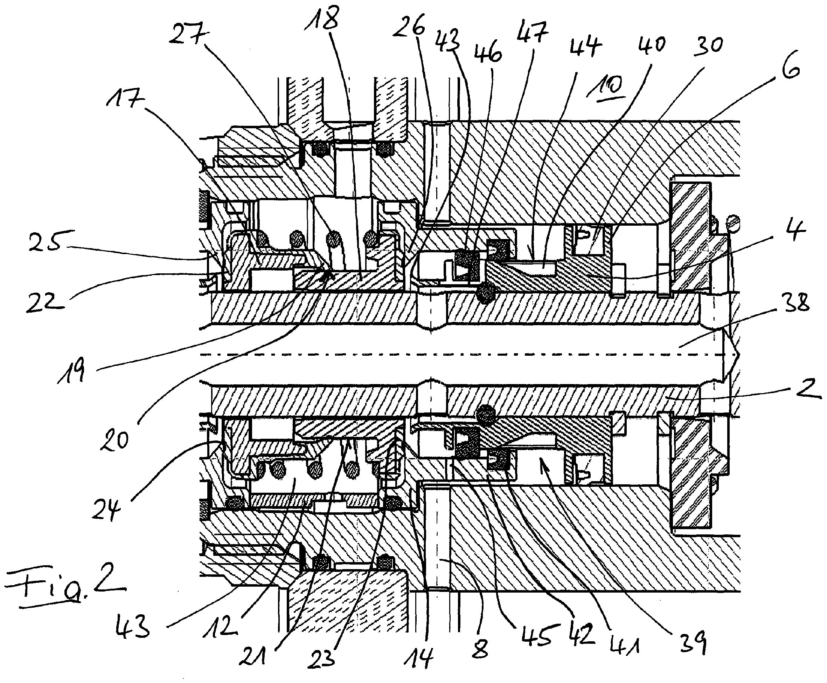

Das in Fig. 2 veranschaulichte zweite Ausführungsbeispiel unterscheidet sich von dem nach Fig. 1 wie folgt: Die Drosseldichtung 41 ist hier in ständiger Anlage an dem Ansatz 33 der zugeordneten Kolbenstruktur 3 bzw. 4; sie liegt ständig, d.h. auch in der Nullstellung, auf der - mit Ausnahme der Nuten 40 - zylindrischen Oberfläche 44 des jeweiligen Ansatzes 33 auf. Die Entlüftungspassagen für die pneumatischen Arbeitsräume 9, 10 umfassen demgemäß jeweils eine gesonderte Entlüftungsbohrung 45, welche den ringförmigen Vorsprung 42 des betreffenden Strukturelements 13 bzw. 14 durchdringt und ständig mit dem zugeordneten Kanal 8 kommuniziert. Die in Fig. 2 gezeigte, dem pneumatischen Arbeitsraum 10 zugeordnete Entlüftungsbohrung 45 wird durch das an der Kolbenstruktur 4 angeordnete Dichtelement 46 verschlossen, wenn die Steuerstange 2 mitsamt der darauf fixierten Kolbenstruktur 4 so weit nach links bewegt wird, dass die Dichtkante 34 der Kolbenstruktur 4 an dem Ventilschieber 18 abdichtet und beginnt, diesen von dem Ventilsitz 26 abzuheben und zugleich die Drosseldichtung 41 beginnt, die Drosselpassage 39 zu öffnen. Durch mehrere unterhalb des Dichtelements 46, d.h. zwischen diesem und der Kolbenstruktur 4 hindurchtretende Druckmittelpassagen 47 gelangt Druckluft aus dem Druckluftraum 43 zur Drosselpassage 39 und von dieser zum Kanal 8. Für die zweite Funktionsseite der Ventileinheit 11 gilt entsprechendes bei umgekehrter Verschiebung der Steuerstange 2.

Im Übrigen ergeben sich Aufbau und Funktion des Ausführungsbeispiels nach Fig. 2 aus Fig. 1 und den vorstehenden Erläuterungen des darin gezeigten ersten Ausführungsbeispiels.

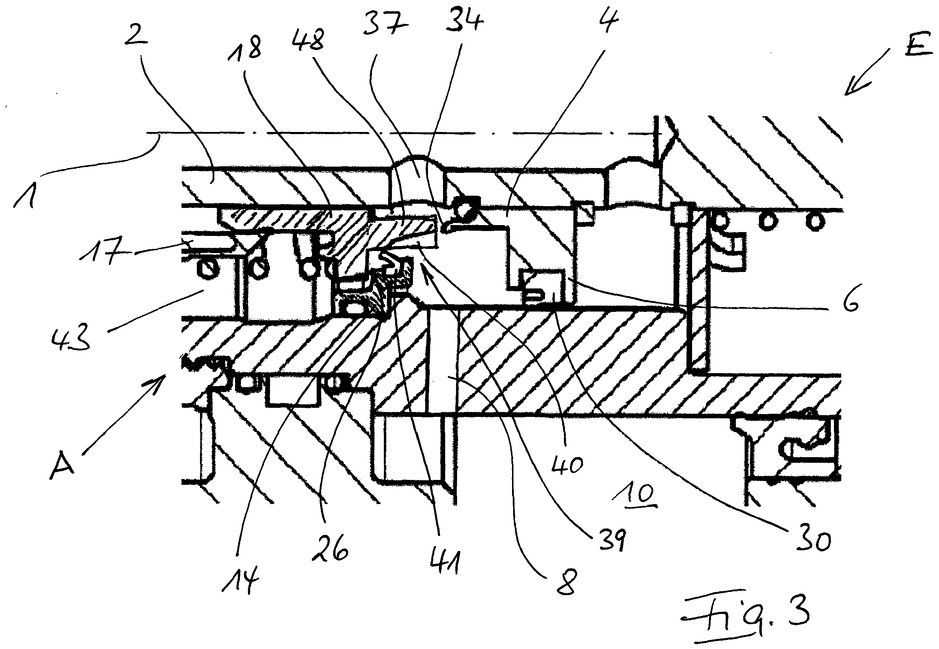

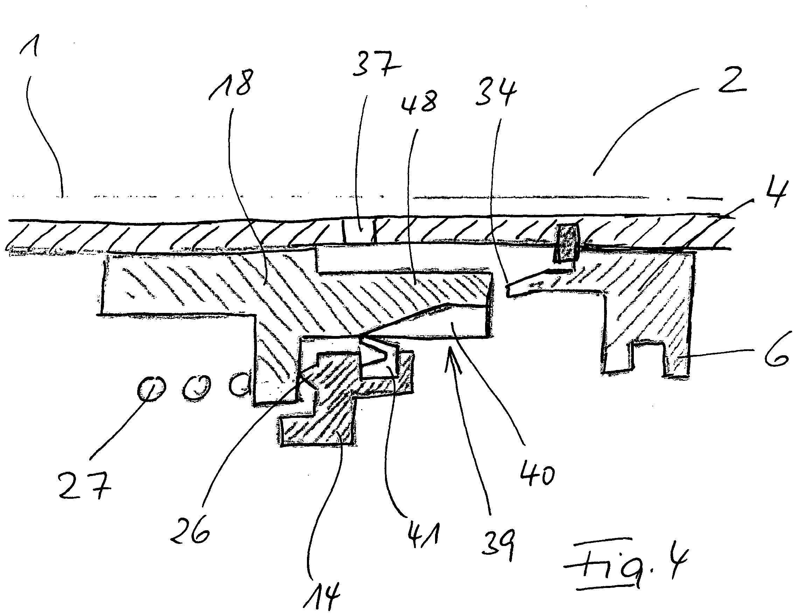

Die Figuren 3, 4 und 5 veranschaulichen - jeweils im Umfang der relevanten Details - Ausführungsbeispiele, bei denen die Drosselpassagen 39, anders als bei den Ausführungsbeispielen nach den Figuren 1 und 2, nicht an den Kolbenstrukturen 3 und 4, sondern vielmehr an den Ventilschiebern 17 und 18 angeordnet sind. Nach Fig. 3 weist hierzu der (dem pneumatischen Arbeitsraum 10 zugeordnete) Ventilschieber 18 einen - in Richtung auf die Kolbenstruktur 4 vorspringenden - ringförmigen Ansatz 48 auf. In diesem sind zwei die Drosselpassagen 39 begrenzende Nuten 40 ausgeführt. Die radiale Tiefe der Nuten 40 vergrößert sich dabei längs deren axialer Erstreckung in Richtung auf die Kolbenstruktur 4. Wie bei den zuvor beschriebenen Ausführungsbeispielen legt sich - bei einer entsprechenden Verschiebung der Steuerstange 2 nach links - die Dichtkante 34 der Kolbenstruktur 4 an den Ventilschieber 18 (hier stirnseitig an dessen Ansatz 48) an und hebt bei fortgesetzter Bewegung den Ventilschieber 18 vom zugeordneten Ventilsitz 26 ab. Druckluft gelangt aus dem Druckluftraum 43 durch den Ringspalt zwischen Ventilschieber 18 und Ventilsitz 26, die Drosselpassage 39 und den Kanal 8 hindurch in den pneumatischen Arbeitsraum 10. Der Ventilsitz 26 ist (vgl. auch die Detailzeichnung gemäß Fig. 4) an einem Strukturelement 14 ausgeführt, welches ortsfest an der Ausgangseinheit A angebracht ist und auch die mit der Nut 40 zusammenwirkende Drosseldichtung 41 aufnimmt. Die für die Durchströmung mit Druckluft zur Verfügung stehende wirksame Querschnittsfläche der Drosselpassage 39 richtet sich nach der Stellung des Ventilschiebers 18 relativ zur Ausgangseinheit A, welche wiederum von der Stellung der Steuerstange 2 relativ zur Ausgangseinheit A abhängt.

Im Übrigen ergeben sich Aufbau und Funktion des Ausführungsbeispiels nach den Figuren 3 und 4 aus den Figuren 1 und 2 sowie den vorstehenden Erläuterungen der darin gezeigten ersten und zweiten Ausführungsbeispiele.

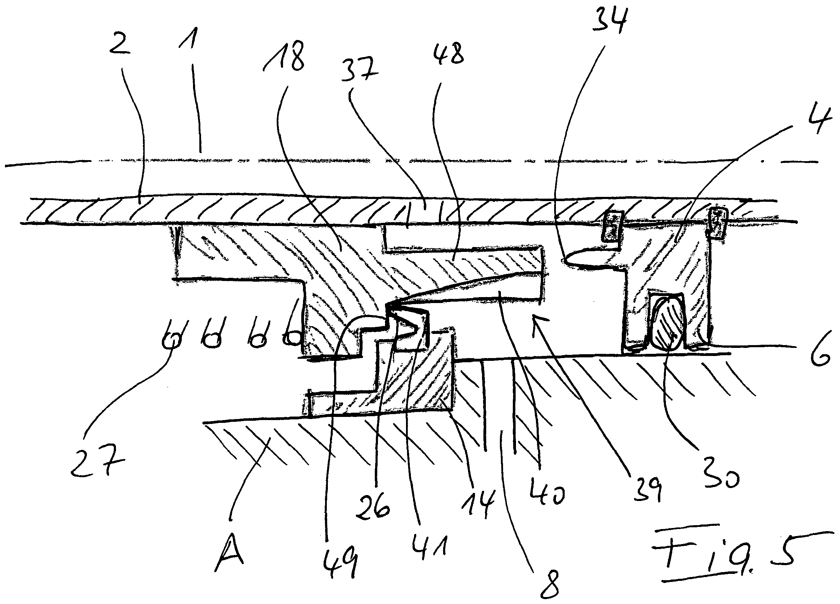

Das in Fig. 5 veranschaulichte Ausführungsbeispiel entspricht weitestgehend dem nach den Figuren 3 und 4. Der wesentliche Unterschied besteht darin, dass hier die Drosseldichtung 41 zusätzlich die Funktion des Ventilsitzes 26 der zuvor erläuterten Ausführungsbeispiele übernimmt. Somit dichtet in der Nullstellung der Schaltkraftunterstützungseinrichtung die Drosseldichtung 41 den Ventilschieber 18 gegenüber der Ausgangseinheit ab, indem sie stirnseitig an dem Absatz 49 des Ventilschiebers 18 anliegt.

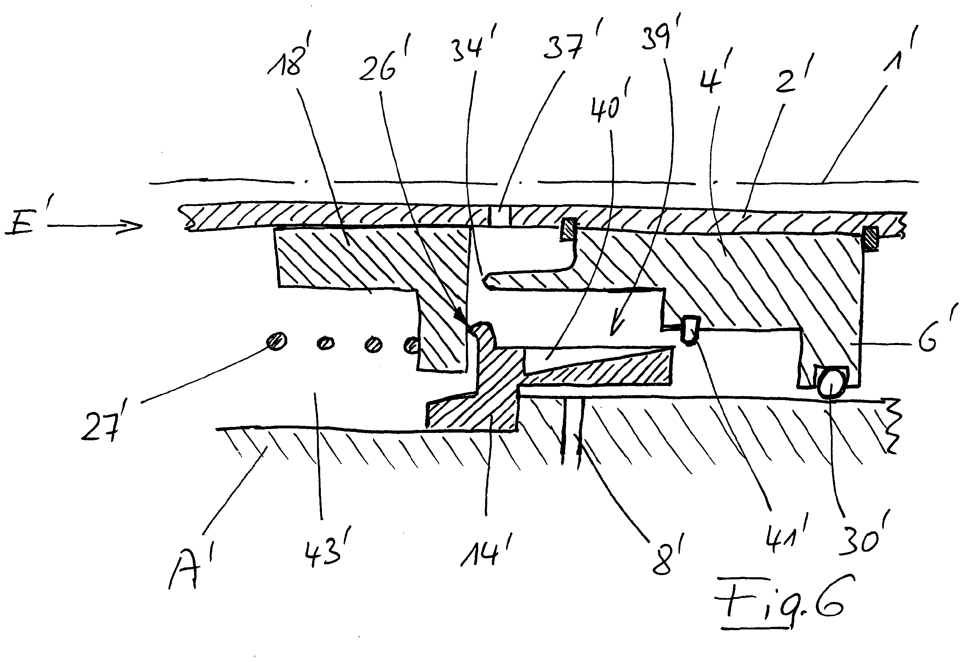

Fig. 6 zeigt schematisch eine zu den vorstehend erläuterten Ausführungsbeispielen insoweit andersartige konstruktive Umsetzung der vorliegenden Erfindung, als hier die mindestens eine Drosselpassage 39' nicht an der Kolbenstruktur 4' bzw. dem Ventilschieber 18' angeordnet ist, sondern vielmehr an dem (ortsfest an der Ausgangseinheit A' angeordneten) Strukturelement 14'. Dieses weist zu diesem Zweck einen in Richtung auf die Kolbenstruktur 4' vorspringenden und diese teilweise umgebenden ringförmigen Ansatz 42' auf. Die radiale Tiefe der Drosselpassage nimmt in Richtung auf den Ventilschieber 18' zu.

Die Drosseldichtung 41' ist in einer Ringnut auf der Kolbenstruktur 4' angebracht. Sie ist in der in Fig. 6 veranschaulichten Nullstellung der Schaltkraftunterstützungseinrichtung unter Ausbildung einer ringförmigen Entlüftungspassage geringfügig von dem Ansatz 42' des Strukturelements 14' abgehoben. Wird die Steuerstange 2' (mit der Kolbenstruktur 4') nach links verschoben, so gelangt die Dichtkante 34' der Kolbenstruktur 4' zur dichtenden Anlage an dem Ventilschieber 18'. Zugleich gelangt die die Drosseldichtung 41' auf den Außenumfang des Ansatzes 42' des Strukturelements 14' und schließt die Entlüftungspassage. Die weitere Funktion der Ausführungsform nach Fig. 6 wie insbesondere die (von der Stellung der Steuerstange 2' relativ zur Ausgangseinheit A' abhängige) Drosselung der Beaufschlagung des pneumatischen Arbeitsraumes 10' durch die Drosselpassage 39' hindurch erschließt sich unmittelbar aus den vorstehenden Erläuterungen der Ausführungsbeispiele nach den Figuren 1 bis 5.

Die mit der Ausführungsform nach Fig. 6 erzielbaren Vorteile gegenüber dem Stand der Technik entsprechen im Wesentlichen jenen, die weiter oben herausgestellt wurden im Hinblick auf die Umsetzung der vorliegenden Erfindung mit einer lagefest an der Ausgangseinheit angeordneten Drosseldichtung.

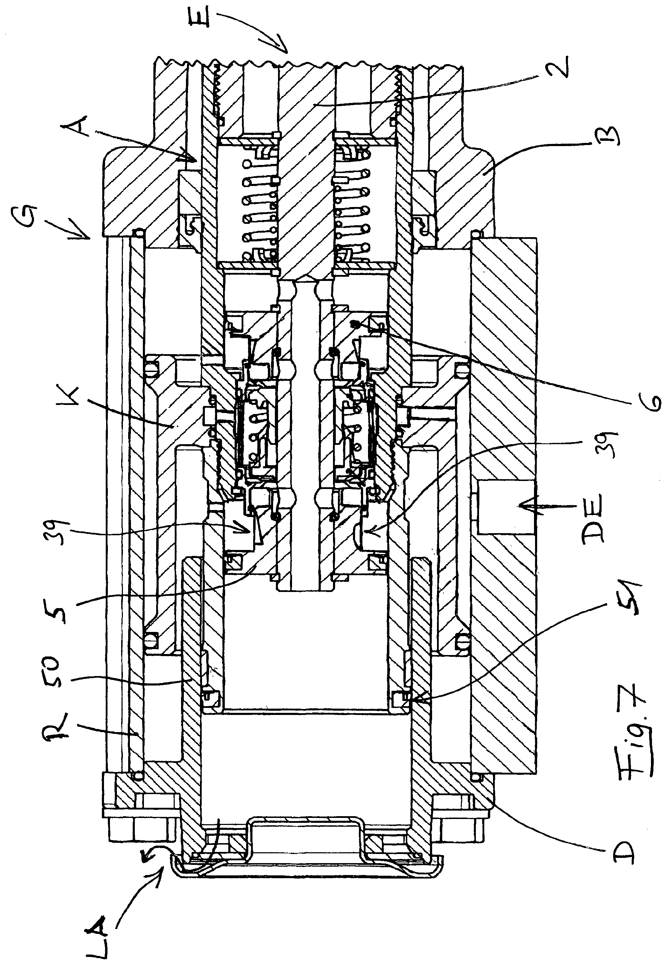

Fig. 7 zeigt einen Längsschnitt durch einen größeren als den in Fig. 1 wiedergegebenen Ausschnitt einer erfindungsgemäß ausgeführten pneumatischen Schaltkraftunterstützungseinrichtung, welche technisch-funktional weitgehend der in Fig. 1 gezeigten entspricht. Insoweit wird, soweit sich aus den nachstehenden Ausführungen nichts anderes ergibt, hinsichtlich technischer Details auf die Erläuterungen zu Fig. 1 verwiesen. Erkennbar ist in Fig. 7 das Gehäuse G, welches im Wesentlichen aus drei Hauptkomponenten besteht, nämlich einem rohrförmigen Mittelteil R, einem Deckel D und einem Boden B. Der Deckel D und der Boden B sind dicht mit dem rohrförmigen Mittelteil R verbunden. An dem Deckel D ist ein hülsenförmiger Ansatz 50 vorgesehen, der in das rohrförmige Mittelteil R hinein ragt und gegenüber dem die Ausgangseinheit A abgedichtet ist (Dichtung 51). An dem Deckel ist weiterhin die Entlüftung vorgesehen (vgl. den Luftauslass LA). Der Drucklufteinlass DE ist demgegenüber an dem rohrförmigen Mittelteil R angeordnet, in welchem der Kolben K dichtend geführt ist.

Veranschaulicht ist in Fig. 7 weiterhin die - weiter oben eingehend beschriebene - Möglichkeit, dass mehrere an demselben Bauteil (hier dem Ventilkolben 5) vorgesehene Drosselpassagen 39 eine unterschiedliche Geometrie aufweisen und axial zueinander versetzt angeordnet sein können.

## Patentansprüche

1. Pneumatische Schaltkraftunterstützungseinrichtung für ein Schaltgetriebe, umfassend eine einen Drucklufteinlass (DE) und eine Entlüftung (LA) aufweisende Gehäusestruktur (G), eine eingangsseitige, längs ihrer Achse (1) verschiebbare Steuerstange (2) und eine die Steuerstange umgebende, parallel zu dieser verschiebbare Ausgangseinheit (A), mit den folgenden Merkmalen:
- die Ausgangseinheit (A) umfasst einen in der Gehäusestruktur dichtend geführten, zwei pneumatische Arbeitsräume (9, 10) definierenden Arbeitskolben (K);
- funktional zwischen der Steuerstange (2) und der Ausgangseinheit (A) und strömungstechnisch zwischen dem Drucklufteinlass und den pneumatischen Arbeitsräumen (9, 10) ist eine Ventilanordnung (11) vorgesehen, welche durch entsprechende Beaufschlagung der beiden pneumatischen Arbeitsräume (9, 10) eine pneumatische Folgeregelung der Ausgangseinheit (A) zu der Steuerstange (2) bewirkt;
- die Ventilanordnung (11) umfasst zwei mit der Steuerstange (2) gekoppelte, an der Ausgangseinheit (A) dichtend verschiebbar geführte Kolbenstrukturen (3, 4) und zwei relativ zur Steuerstange (2) sowie zur Ausgangseinheit (A) längsverschiebbar geführte Ventilschieber (17, 18), wobei jeweils eine Kolbenstruktur (3, 4) längs einer Dichtkante (34) mit einem zugeordneten Ventilschieber (17, 18) zusammenwirkt und jeder der beiden Ventilschieber (17, 18) seinerseits jeweils mit einem zugeordneten, ortsfest an der Ausgangseinheit (A) angeordneten Ventilsitz (25, 26) zusammenwirkt; und **dadurch gekennzeichnet, dass**:
- zumindest einem Kolbenstruktur/Ventilschieber-Paar eine Drosseleinrichtung dergestalt zugeordnet ist, dass eine ortsfest an der Ausgangseinheit (A) angeordnete Drosseldichtung (41) mit mindestens einer an dem betreffenden Ventilschieber (17, 18) oder der betreffenden Kolbenstruktur (3, 4) angeordneten Drosselpassage (39) zusammenwirkt, deren wirksame Querschnittsfläche von der relativen Position des die Drosselpassage (39) aufweisenden Bauteils relativ zu der zugeordneten Drosseldichtung (41) abhängt.

2. Schaltkraftunterstützungseinrichtung nach Anspruch 1, **dadurch gekennzeichnet, dass** die mindestens eine Drosselpassage (39) an der betreffenden Kolbenstruktur (3, 4) angeordnet ist.

3. Schaltkraftunterstützungseinrichtung nach Anspruch 2, **dadurch gekennzeichnet, dass** die mindestens eine Drosselpassage (39) außen auf einem Mantelabschnitt der betreffenden Kolbenstruktur (3, 4) angeordnet ist.

4. Schaltkraftunterstützungseinrichtung nach Anspruch 2 oder Anspruch 3, **dadurch gekennzeichnet, dass** die Drosseldichtung (41) die Kolbenstruktur (3, 4) umgebend an einem Vorsprung (42) eines Strukturelements (13, 14) angeordnet ist, an welchem auch der mit dem zugeordneten Ventilschieber (17, 18) zusammenwirkende Ventilsitz (25, 26) angeordnet ist.

5. Schaltkraftunterstützungseinrichtung nach einem der Ansprüche 2 bis 4, **dadurch gekennzeichnet, dass** in einer Nullstellung der Steuerstange (2) relativ zur Ausgangseinheit (A) eine von der Drosselpassage (39) unabhängige Entlüftungspassage zwischen dem zugeordneten Arbeitsraum (9, 10) und der Entlüftung besteht.

6. Schaltkraftunterstützungseinrichtung nach Anspruch 6, **dadurch gekennzeichnet, dass** in der Nullstellung die Drosseldichtung (41) von der Kolbenstruktur (3, 4) abhebt, um die Entlüftungspassage freizugeben.

7. Schaltkraftunterstützungseinrichtung nach der Kombination der Ansprüche 4 und 5, **dadurch gekennzeichnet, dass** der Vorsprung (42) des Strukturelements (13, 14) von einer Entlüftungsbohrung (45) durchsetzt ist und an der zugeordneten Kolbenstruktur (3, 4) ein Dichtelement (46) angeordnet ist, welches die Entlüftungsbohrung (45) verschließt, wenn die Drosselpassage (39) freigegeben wird.

8. Schaltkraftunterstützungseinrichtung nach Anspruch 1, **dadurch gekennzeichnet, dass** die mindestens eine Drosselpassage (39) am Ventilschieber (17, 18) angeordnet ist.

9. Schaltkraftunterstützungseinrichtung nach Anspruch 8, **dadurch gekennzeichnet, dass** die mindestens eine Drosselpassage (39) außen auf einem Mantelabschnitt des betreffenden Ventilschiebers (17, 18) angeordnet ist.

10. Schaltkraftunterstützungseinrichtung nach Anspruch 8 oder Anspruch 9, **dadurch gekennzeichnet, dass** der Ventilsitz (25, 26) durch die Drosseldichtung (41) gebildet ist.

11. Schaltkraftunterstützungseinrichtung nach Anspruch 8 oder Anspruch 9, **dadurch gekennzeichnet, dass** der Ventilsitz (25, 26) räumlich und funktional unabhängig von der Drosseldichtung (41) ausgeführt ist.

12. Schaltkraftunterstützungseinrichtung nach Anspruch 1, **dadurch gekennzeichnet, dass** die Drosseldichtung (41') nicht ortsfest an der Ausgangseinheit (A') sondern vielmehr an der Kolbenstruktur (4') und dass die mindestens eine Drosselpassage (39') nicht an dem Ventilschieber (18') oder der Kolbenstruktur (4') sondern vielmehr ortsfest an der Ausgangseinheit (A') angeordnet ist.

## Claims

1. A pneumatic shifting-force assistance device for a manual transmission, comprising a housing structure (G) provided with a compressed-air inlet (DE) and a vent (LA), a control rod (2) on the input side that can be displaced along its axis (1), and an output unit (A) that surrounds the control unit and can be displaced parallel thereto, with the following features:
- the output unit (A) comprises a working piston (K) guided sealingly in the housing structure and defining two pneumatic working chambers (9, 10);
- a valve arrangement (11), which exerts pneumatic sequential control from the output unit (A) to the control rod (2) by corresponding pressurization of the two pneumatic working chambers (9, 10), is provided functionally between the control rod (2) and the output unit (A) and fluidically between the compressed-air inlet and the pneumatic working chambers (9, 10);
- the valve arrangement (11) comprises two piston structures (3, 4) coupled with the control rod (2), guided sealingly and displaceably on the output unit (A), and two valve slides (17, 18) guided longitudinally displaceably relative to the control rod (2) as well as to the output unit (A), wherein each piston structure (3, 4) cooperates respectively along a sealing edge (34) with an associated valve slide (17, 18) and each of the two valve slides (17, 18) in turn cooperates respectively with an associated valve seat (25, 26) disposed on the output unit (A) so as to move therewith;
**characterized in that**:
- a throttle device is associated at least with one piston structure/valve slide pair in such a way that a throttle seal (41) disposed on the output unit (A) so as to move therewith cooperates with at least one throttle passage (39) disposed on the valve slide (17, 18) in question or the piston structure (3, 4) in question, and the active cross-sectional area of which depends on the relative position of the component provided with the throttle passage (39) relative to the associated throttle seal (41).

2. A shifting-force assistance device according to claim 1, **characterized in that** the at least one throttle passage (39) is disposed on the piston structure (3, 4) in question.

3. A shifting-force assistance device according to claim 2, **characterized in that** the at least one throttle passage (39) is disposed externally on a shell portion of the piston structure (3, 4) in question.

4. A shifting-force assistance device according to claim 2 or claim 3, **characterized in that** the throttle seal (41) is disposed, surrounding the piston structure (3, 4), on a projection (42) of a structure element (13, 14) on which the valve seat (25, 26) interacting with the associated valve slide (17, 18) is also disposed.

5. A shifting-force assistance device according to one of claims 2 to 4, **characterized in that** a vent passage that is independent of the throttle passage (39) exists between the associated working chamber (9, 10) and the vent in a neutral position of the control rod (2) relative to the output unit (A).

6. A shifting-force assistance device according to claim 6, **characterized in that** the throttle seal (41) lifts from the piston structure (3, 4) in the neutral position, in order to release the vent passage.

7. A shifting-force assistance device according to the combination of claims 4 and 5, **characterized in that** the projection (42) of the structure element (13, 14) is perforated by a vent bore (45) and a seal element (46), which closes the vent bore (45) when the throttle passage (39) is released, is disposed on the associated piston structure (3, 4).

8. A shifting-force assistance device according to claim 1, **characterized in that** the at least one throttle passage (39) is disposed on the valve slide (17, 18).

9. A shifting-force assistance device according to claim 8, **characterized in that** the at least one throttle passage (39) is disposed externally on a shell portion of the valve slide (17, 18) in question.

10. A shifting-force assistance device according to claim 8 or claim 9, **characterized in that** the valve seat (25, 26) is formed by the throttle seal (41).

11. A shifting-force assistance device according to claim 8 or claim 9, **characterized in that** the valve seat (25, 26) is made spatially and functionally independent of the throttle seal (41).

12. A shifting-force assistance device according to claim 1, **characterized in that** the throttle seal (41') is fixed not on the output unit (A') so as to move therewith but instead on the piston structure (4'), and **in that** the at least one throttle passage (39') is disposed not on the valve slide (18') or the piston structure (4') but instead on the output unit (A') so as to move therewith.

## Revendications

1. Dispositif pneumatique d'assistance à la force de passage des vitesses pour une boîte de vitesses mécanique, comprenant une structure de boîtier (G) comportant une entrée d'air comprimé (DE) et une évacuation d'air (LA), une tige de commande (2) côté entrée, déplaçable le long de son axe (1) et une unité de sortie (A) entourant la tige de commande déplaçable, parallèlement à celle-ci, avec les caractéristiques suivantes :
- l'unité de sortie (A) comprend un piston de travail (K) guidé hermétiquement dans la structure de boîtier, définissant deux espaces de travail (9, 10) pneumatiques,
- un agencement de soupape (11) est prévu de façon fonctionnelle entre la tige de commande (2) et l'unité de sortie (A) et selon la technique des fluides entre l'entrée d'air comprimé et les espaces de travail pneumatiques (9, 10), lequel provoque une régulation asservie pneumatique de l'unité de sortie (A) par rapport à la tige de commande (2) par sollicitation correspondante des deux espaces de travail pneumatiques (9, 10),
- l'agencement de soupape (11) comprend deux structures de piston (3, 4) couplées à la tige de commande (2) guidées mobiles hermétiquement sur l'unité de sortie (A) et deux tiroirs de soupape (17, 18) guidés longitudinalement mobiles par rapport à la tige de commande (2) ainsi que par rapport à l'unité de sortie (A), une structure de piston (3, 4) coopérant respectivement le long d'un bord d'étanchéité (34) avec un tiroir de soupape attribué (17, 18) et chacun des deux tiroirs de soupape (17, 18) coopérant de son côté respectivement avec un siège de soupape (25, 26) attribué, disposé fixement sur l'unité de sortie (A),
et **caractérisé en ce que** :
- au moins un système d'étranglement est attribué à une paire structure de piston/tiroir de soupape de telle sorte
- qu'un joint d'étranglement (41) disposé fixe sur l'unité de sortie (A) coopère avec au moins un passage d'étranglement (39) disposé sur le tiroir de soupape concerné (17, 18) ou la structure de piston concernée (3, 4) dont la surface de section efficace dépend de la position relative de l'élément comportant le passage d'étranglement (39) par rapport au joint d'étranglement attribué (41).

2. Dispositif pneumatique d'assistance à la force de passage des vitesses selon la revendication 1, **caractérisé en ce qu'**au moins un passage d'étranglement (39) est disposé sur la structure de piston correspondante (3, 4).

3. Dispositif pneumatique d'assistance à la force de passage des vitesses selon la revendication 2, **caractérisé en ce qu'**au moins un passage d'étranglement (39) est disposé en dehors sur une section d'enveloppe de la structure de piston correspondante (3, 4).

4. Dispositif pneumatique d'assistance à la force de passage des vitesses selon la revendication 2 ou la revendication 3, **caractérisé en ce que** le joint d'étranglement (41) est disposé entourant la structure de piston (3, 4) sur une saillie (42) d'un élément de structure (13, 14) sur lequel est également disposé le siège de soupape (25, 26) interagissant avec le tiroir de soupape (17, 18) attribué.

5. Dispositif pneumatique d'assistance à la force de passage des vitesses selon l'une quelconque des revendications 2 à 4, **caractérisé en ce que** dans une position neutre de la tige de commande (2) il y a un passage d'évacuation d'air indépendant du passage d'étranglement (39) par rapport à l'unité de sortie entre l'espace de travail attribué (9, 10) et l'évacuation d'air.

6. Dispositif pneumatique d'assistance à la force de passage des vitesses selon la revendication 5, **caractérisé en ce que** dans la position neutre, le joint d'étranglement (41) se lève de la structure de piston (3, 4) pour libérer le passage d'évacuation d'air.

7. Dispositif pneumatique d'assistance à la force de passage des vitesses selon la combinaison des revendications 4 et 5, **caractérisé en ce que** la saillie (42) de l'élément de structure (13, 14) est traversé par un trou d'évacuation d'air (45) et un élément d'étanchéité (46) est disposé sur la structure de piston attribuée (3, 4), lequel ferme le trou d' évacuation d'air (45), si le passage d'étranglement (39) est libéré.

8. Dispositif pneumatique d'assistance à la force de passage des vitesses selon la revendication 1, **caractérisé en ce qu'**au moins un passage d'étranglement (39) est disposé sur le tiroir de soupape (17, 18).

9. Dispositif pneumatique d'assistance à la force de passage des vitesses selon la revendication 8, **caractérisé en ce qu'**au moins un passage d'étranglement (39) est disposé à l'extérieur sur une section d'enveloppe du tiroir de soupape concerné (17, 18).

10. Dispositif pneumatique d'assistance à la force de passage des vitesses selon la revendication 8 ou la revendication 9, **caractérisé en ce que** le siège de soupape (25, 26) est formé par le joint d'étranglement (41).

11. Dispositif pneumatique d'assistance à la force de passage des vitesses selon la revendication 8 ou la revendication 9, **caractérisé en ce que** le siège de soupape (25, 26) est exécuté du point de vue spatial et fonctionnel en fonction du joint d'étranglement (41).

12. Dispositif pneumatique d'assistance à la force de passage des vitesses selon la revendication 1, **caractérisé en ce que** le joint d'étranglement (41') est disposé non pas fixement sur l'unité de sortie (A'), mais bien plus sur la structure de piston (4') et **en ce qu'**au moins un passage d'étranglement (39') n'est pas disposé sur le tiroir de soupape (18') ou la structure de piston (4') mais bien plus fixement sur l'unité de sortie (A').
